# EUROPEAN PATENT APPLICATION

(11) **EP 2 690 876 A2**
(43) Date of publication of application: **29.01.2014**
(21) Application number: 12760647.3
(22) Date of filing: 22.03.2012
(51) Int. Cl.: H04N 21/235, H04N 21/63, H04H 20/33

(54) **HETEROGENEOUS NETWORK-BASED LINKED BROADCAST CONTENT TRANSMITTING/RECEIVING DEVICE AND METHOD**

(30) Priority: 22.03.2011 KR 20110025162; 22.03.2012 KR 20120029158
(71) Applicant: Electronics And Telecommunications Research Institute, Daejeon-si 305-700 (KR)
(72) Inventor: KWON, Hyoung Jin, Cheongju-si Chungbuk 361-741 (KR); YUN, Kug Jin, Daejeon 305-759 (KR); LEE, Gwang Soon, Daejeon 305-747 (KR); CHEONG, Won Sik, Daejeon 305-761 (KR); HUR, Nam Ho, Daejeon 305-768 (KR)
(74) Representative: Betten & Resch
(86) International application number: PCT/KR2012/002057
(87) International publication number: WO 2012/128563

(57) **Abstract**

Provided are an apparatus and method of transmitting and receiving associated broadcasting contents based on a heterogeneous network. The transmission system generates a basic contents stream for basic contents configuring the broadcasting contents to transmit the basic contents stream to a terminal through a broadcasting network, generates an additional contents stream for additional contents associated with the basic contents to transmit the additional contents stream to the terminal through a communication network, and further transmits at least one of associated playing information on the basic contents and associated playing information on the additional contents to the terminal, and the reception terminal receives the basic contents stream, the additional contents stream, and the associated playing information and synchronize the basic contents and the additional contents with each other to play them, thereby playing the broadcasting contents in real time.

## Description

### [Technical Field]

The present invention relates to an apparatus and method of transmitting and receiving broadcasting contents, and more particularly, to an apparatus and method of transmitting and receiving associated broadcasting contents based on a heterogeneous network.

### [Background Art]

In order to show a more lively scene, the demand for an image service to which a three-dimensional (3D) effect is added, an image service capable of providing a degree of freedom to a time point, or the like, has increased, and a new multimedia service using the image services has appeared. However, in order to transmit these 3D contents through a broadcasting network, a bandwidth wider than that of an existing two-dimensional (2D) AV program is required. As one of transmission methods for transmitting these large capacity 3D contents, there is a method of transmitting 3D data added to an existing 2D AV program using an extra bandwidth in an idle time in advance, storing the 3D data in a receiver, and then providing a service while synchronizing the 3D data with a real time broadcasting stream when the real time broadcasting stream is transmitted (System and Method for Digital Real Sense Transmitting/Receiving based on Non-Real time, Korean Patent Laid-Open Publication No. 10-2008-0053175, June 12, 2008). Further, recently, the advanced television systems committee (ATSC) which is the North American Broadcasting Standard Institute has standardized a mechanism of transmitting an IP packet through the ATSC broadcasting network, which is currently established as a candidate standard, as non-real time (NRT) delivery specifications. Therefore, there is also a method of transmitting 3D additional contents according to the ATSC NRT specification.

However, in all of the above-mentioned methods, since it is assumed that the 3D additional contents are transmitted in advanced and the receiver stores the 3D additional contents therein in order to associate the 3D additional contents with a real time AV program, there are several problems.

First, in view of contents, editing on the contents should be completed until a non-real time service starts, and in the case of live broadcasting contents, it is difficult to use a method of transmitting the live broadcasting contents in non-real time in advance. Further, in the case of large capacity contents having a long length, a download time increases, a large capacity storage device is required, and contents of a program may be leaked before broadcasting.

Next, also in view of a service, unlike a real-time broadcasting service, in the case of a non-real time service, a delay corresponding to a contents download time is generated, and also in the case of a video on demand (VOD) service, a delay corresponding a download time is generated. Further, after a real time program is started, even though only contents portions after the started real time program is to be downloaded in order to receive an associated service, since the additional contents are configured of one file, the entire file should be downloaded.

### [Disclosure]

### [Technical Problem]

The present invention provides a transmission and reception method of associated broadcasting contents based on a heterogeneous network in a transmission and reception system of broadcasting contents.

The present invention also provides a transmission system of associated broadcasting contents based on a heterogeneous network.

The present invention also provides a reception terminal of associated broadcasting contents based on a heterogeneous network.

### [Technical Solution]

In an aspect of the present invention, a method of transmitting broadcasting contents in a transmission system of associated broadcasting contents based on a heterogeneous network is provided. The transmission method comprises generating a basic contents stream for basic contents, transmitting the generated basic contents stream to a terminal through a broadcasting network, generating an additional contents stream for additional contents associated with the basic contents, and transmitting the generated additional contents stream to the terminal through a communication network.

At least one of associated playing information on the basic contents and associated playing information on the additional contents may be transmitted to the terminal.

In another aspect of the present invention, a method of receiving broadcasting contents in a reception terminal of associated broadcasting contents based on a heterogeneous network is provided. The reception method comprises receiving a basic contents stream for basic contents from a transmission system through a broadcasting network, receiving an additional contents stream for additional contents associated with the basic contents from the transmission system through a communication network, and playing the broadcasting contents based on the received basic contents stream and additional contents stream.

At least one of associated playing information on the basic contents and associated playing information on the additional contents may be received from the transmission system, and the basic contents and the additional contents may be synchronized with each other based on the received associated playing information.

In yet another aspect of the present invention, a system of transmitting associated broadcasting contents based on a heterogeneous network is provided. The transmission system comprises a broadcasting stream generator generating a basic contents stream for basic contents, a broadcasting network transmitter transmitting the generated basic contents stream to a terminal through a broadcasting network, and a streaming server generating an additional contents stream for additional contents associated with the basic contents and transmitting the generated additional contents stream to the terminal through a communication network.

The broadcasting network transmitter or the streaming server transmits at least one of associated playing information on the basic contents and associated playing information on the additional contents to the terminal.

In yet another aspect of the present invention, a reception terminal of associated broadcasting contents based on a heterogeneous network is provided. The reception terminal comprises a broadcasting network receiver receiving a basic contents stream for basic contents from a transmission system through a broadcasting network, a communication network receiver receiving an additional contents stream for additional contents associated with the basic contents from the transmission system through a communication network, and a broadcasting contents player playing the broadcasting contents based on the received basic contents stream and additional contents stream,

The broadcasting network receiver or the communication network receiver receives at least one of associated playing information on the basic contents and associated playing information on the additional contents from the transmission system, and the broadcasting contents player synchronizes the basic contents and the additional contents with each other based on the received associated playing information.

### [Advantageous Effects]

According to the exemplary embodiment of the present invention, the additional contents associated with the basic contents are transmitted through the communication network in a streaming form, such that a time delay is not generated, and a large capacity storage device is not required in the terminal.

According to the exemplary embodiment of the present invention, only portions of additional contents after a time in which the terminal access a broadcasting service may be streamed.

### [Description of Drawings]

FIG. 1 is a conceptual diagram describing a transmission and reception method of associated broadcasting contents based on a heterogeneous network according to an exemplary embodiment of the present invention.
FIG. 2 is a view schematically showing a wireless communication system according to the exemplary embodiment of the present invention.
FIG. 3 is a flow chart schematically showing a transmission and reception procedure of associated broadcasting contents based on a heterogeneous network according to the exemplary embodiment of the present invention.
FIG. 4 is a flow chart specifically showing a transmission and reception procedure of associated broadcasting contents based on a heterogeneous network in a push scheme according to the exemplary embodiment of the present invention.
FIG. 5 is a flow chart specifically showing a transmission and reception procedure of associated broadcasting contents based on a heterogeneous network in a pull scheme according to the exemplary embodiment of the present invention.
FIG. 6 is a view showing a schematic structure of a transmission system of associated broadcasting contents based on a heterogeneous network according to the exemplary embodiment of the present invention.
FIG. 7 is a view specifically showing the transmission system of associated broadcasting contents based on a heterogeneous network according to the exemplary embodiment of the present invention.
FIG. 8 is a view showing a schematic structure of a reception terminal of associated broadcasting contents based on a heterogeneous network according to the exemplary embodiment of the present invention.
FIG. 9 is a view specifically showing the reception terminal of associated broadcasting contents based on a heterogeneous network according to the exemplary embodiment of the present invention.

### [Mode for Invention]

Hereinafter, some exemplary embodiments in the present invention will be described in detail with reference to the illustrative drawings. It is to be noted that in adding reference numerals to elements of each drawing, like reference numerals refer to like elements even though like elements are shown in different drawings. Further, in describing the present invention, well-known functions or constructions will not be described in detail since they may unnecessarily obscure the understanding of the present invention.

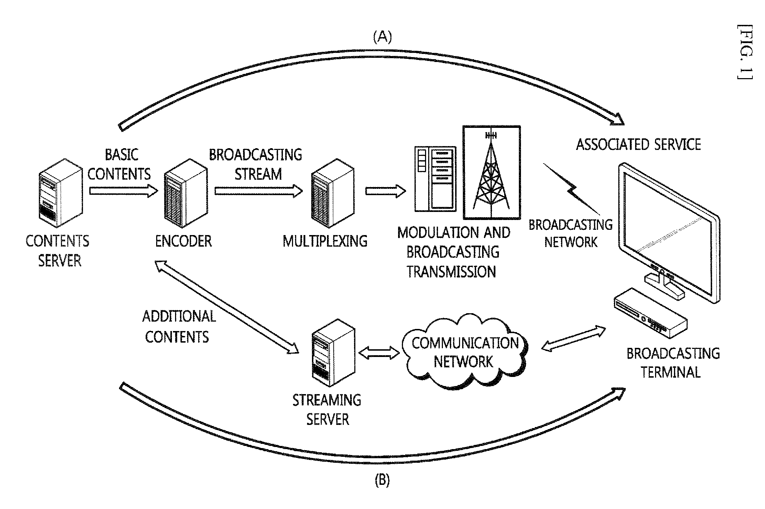

FIG. 1 is a conceptual diagram describing a transmission and reception method of associated broadcasting contents based on a heterogeneous network according to an exemplary embodiment of the present invention.

Referring to FIG. 1, a path (A) of FIG. 1 indicates a path through which a basic contents broadcasting program is transferred as a broadcasting stream from a broadcasting service provider to a broadcasting receiving terminal through a broadcasting network in an existing digital broadcasting system. On the other hand, a path (B) indicates a path through which additional contents associated with the basic contents transmitted through the path (A) is transferred to the broadcasting receiving terminal through a communication network rather than the broadcasting network in a streaming scheme. The terminal associates two streams transferred through heterogeneous networks as described above with each other to provide an associated broadcasting service to a viewer. An example of this heterogeneous network associated broadcasting service may include a stereoscopic video service. The stereoscopic video service is configured so that an added additional video stream is transferred through a communication network and is played in synchronization with an AV broadcasting program in a terminal, thereby making it possible to provide an associated broadcasting service. In addition, the present invention may also be applied to the case of transmitting and receiving additional contents required for various types of broadcastings such as a multi-view broadcasting service, a multichannel audio service, a scalable video service, and the like, in addition to the stereoscopic video service.

Here, the broadcasting terminal needs not to be necessarily connected to the communication network. When another device forming a network with the broadcasting terminal is connected to a streaming server providing an additional contents stream for additional contents, the broadcasting terminal may receive the additional contents through this device. The broadcasting terminal capable to accessing only an existing broadcasting channel may also receive a service associated with additional contents of a heterogeneous network through this access.

Here, the broadcasting network includes the next generation broadcasting network as well as an existing broadcasting network, and the communication network, which is a network capable of performing bi-direction communication, such as an Internet protocol (IP) network such as the Internet, a wired and wireless communication network, a cable network, or the like, includes a network such as the next generation communication network/Internet network/broadcasting network and a communication and broadcasting convergence network, or the like. In the case of the communication and broadcasting convergence network, discrimination between a broadcasting network and a communication network may become ambiguous; however, the present invention may be applied to the case in which two networks are heterogeneous networks. For example, the present invention may also be applied to the case in which basic contents are multicasted through a first communication network in a push scheme and additional contents are multicasted or unicasted through a second communication network in a push or pull scheme.

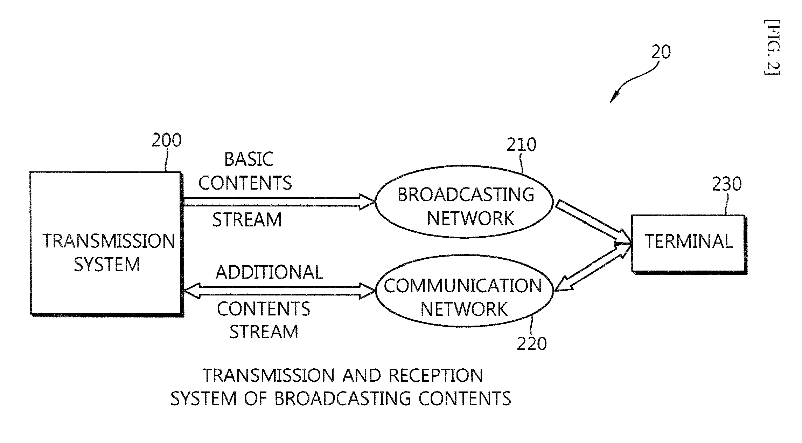

FIG. 2 is a view schematically showing a wireless communication system according to the exemplary embodiment of the present invention.

Referring to FIG. 2, a transmission and reception system 20 of broadcasting contents is configured to include a transmission system 200 and a terminal 230. The broadcasting contents to be transmitted by the transmission system 200 are configured of basic contents and additional contents associated the basic contents. The transmission system 200 generates a basic contents stream for the basic contents to transmit the basic contents stream to the terminal 230 through a broadcasting network 210. In addition, the transmission system 200 generates an additional contents stream for the additional contents to transmit the additional contents stream to the terminal 250 through a communication network 220. The terminal 250 associates the basic contents and the additional contents with each other based on the basic contents stream received through the broadcasting network 210 and the additional contents stream received through the communication network 220 to play the broadcasting contents.

Specific operations of the transmission system 200 and the terminal 230 will be described.

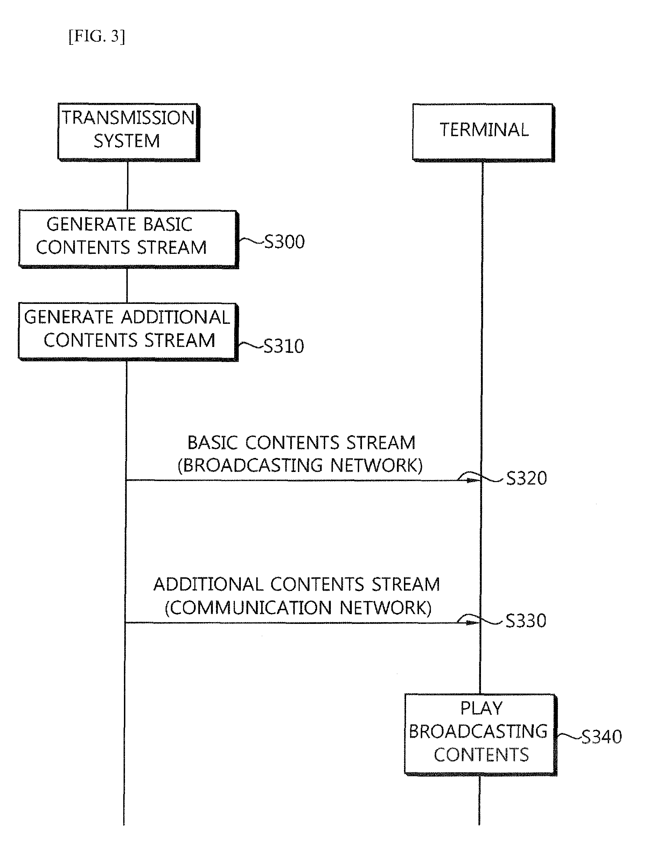

FIG. 3 is a flow chart schematically showing a transmission and reception procedure of associated broadcasting contents based on a heterogeneous network according to the exemplary embodiment of the present invention.

Referring to FIG.3, the transmission system generates a basic contents stream for basic contents configuring broadcasting contents (S300). In addition, the transmission system generates an additional contents stream for additional contents associated with the basic contents (S310).

The broadcasting contents are configured of the basic contents and the additional contents. The basic contents mean contents capable of being transmitted through the broadcasting network, and received and played in the broadcasting terminal. For example, the basic contents may be configured of multimedia data such as a still picture, a moving picture, a computer graphic (CG), and the like, a text, and the like.

The additional contents mean contents transmitted to the terminal through the communication network and associated with the basic contents. For example, in the case of 3D stereoscopic broadcasting, the additional contents associated with the basic contents that are 2D images are 3D additional information synchronized with the 2D image to allow a 3D image to be played. In addition, for example, each of left and right images associated with the 3D image configuring the broadcasting contents may be divided into the basic contents (the left image) and the additional contents (the right image). In this case, the left image may be transmitted to the terminal through the broadcasting network, and the right image may be transmitted to the terminal through the communication network.

Although FIG. 3 shows that S300 is performed before S310, S310 may be performed before S300 or S300 and S310 may be simultaneously performed.

The transmission system transmits the basic contents stream to the terminal through the broadcasting network (S320).

The transmission system transmits the additional contents stream to the terminal through the communication network (S330).

In this case, at least one of associated playing information on the basic contents and associated playing information on the additional contents is additional transmitted to the terminal (not shown).

The associated playing information on the basic contents and the associated playing information on the additional contents, which are information required for associated playing the basic contents and the additional contents so as to be synchronized with each other, may be information informing a playing start time point of the additional contents when the basic contents transmitted through the broadcasting network and the additional contents transmitted through the communication network associate with each other or information directly or indirectly informing whether a frame or an access unit (AU) of the two contents is the n-th frame or access unit from a start of the contents. The terminal may find corresponding positions of the basic contents and the additional contents received through different networks based on the associated playing information. This process is referred to as synchronization, and the terminal associates and plays the synchronized basic contents and the additional contents, thereby making it possible to play the broadcasting contents.

At least one of the associated playing information on the basic contents and the associated playing information on the additional contents may be included in the basic contents stream and transmitted through the broadcasting network. Alternatively, at least one of the associated playing information on the basic contents and the associated playing information on the additional contents may be included in the additional contents stream and transmitted through the communication network. Alternatively, at least one of the associated playing information on the basic contents and the associated playing information on the additional contents may be transmitted to the terminal through the broadcasting network or the communication network in advance. Alternatively, the associated playing information on the basic contents may be included in the basic contents stream and transmitted through the broadcasting network, and the associated playing information on the additional contents may be included in the additional contents stream and transmitted through the communication network.

In addition, the associated playing information on the basic contents and access information on the additional contents may be included in the basic contents stream and transmitted to the terminal through the broadcasting network. The terminal may access the additional contents through the access information on the additional contents, which will be described below.

Meanwhile, the basic contents and the additional contents may have the same frame ordering. In this case, the terminal may perform synchronization between the basic contents and the additional contents even in the case in which it recognizes only any one of the associated playing information on the basic contents and the associated playing information on the additional contents. For example, in the case in which the terminal recognizes the associated playing information on the basic contents and recognizes a playing position of the basic contents based on the associated playing information on the basic contents, the terminal may recognize a playing position of the additional contents based on the associated playing information on the basic contents since the basic contents and the additional contents have the same frame ordering.

Meanwhile, the additional contents stream may be transmitted to the terminal through the communication network in the push or pull scheme.

The push scheme is a scheme of transferring the additional contents synchronized with a real time broadcasting service to a viewer requesting an associated service in a multicast form. The pull scheme, which is a service form of providing different contents to each of viewers, is a scheme of performing a response using corresponding additional contents when a request is made from a viewer. For example, when an access of the terminal to the basic contents is made in the middle of the basic contents, in the case of the push scheme, the terminal may start receiving the additional contents which are served in a multicast form and, may find a playing position of the additional contents corresponding to a playing position of the basic contents and synchronize two contents streams with each other to play them in a receive end. In the case of the pull scheme, the terminal may need to request the transmission system (a streaming server) for the additional contents from a playing position of the basic contents in consideration of an offset. The terminal may access the additional contents based on the access information on the additional contents. If the associated playing information on the basic contents or the associated playing information on the additional contents is transmitted through the communication network separately from the additional contents stream, the transmission system may transmit access information (for example, URL or URI information of the associated playing information on the basic contents or the associated playing information on the additional contents) on the associated playing information to the terminal, and the terminal may receive the access information and access the associated playing information on the basic contents or the associated playing information on the additional contents through the communication network.

In addition, the additional contents stream may be more than one and each additional contents stream may be generated by being encoded in different encoding rates. This is to ensure real time broadcasting by providing streams encoded in encoding rates appropriate for communication environments of each terminal since a plurality of terminals receiving the additional contents from the transmission system may be present and communication environments of communication networks connected to each terminal may be different.

In this case, in order to support bandwidths of various terminals, the transmission system may divide and transmit the additional contents streams encoded in different encoding rates according to a communication state of the communication network to different ports (logical channels).

In addition, the transmission system may further transmit access information on the basic contents through the communication network (not shown). The access information on the basic contents is access information capable of being used to receive the basic contents in the terminal. In the case in which the terminal first receives the additional contents through the communication networks, it may access the basic contents based on the received access information on the basic contents. The access information on the basic contents may be, for example, TSID information on a transport stream (TS) including the basic contents, required to recognize at which RF frequency the basic contents are transmitted, a program number in the TS including the basic contents, and a packet ID (PID) field information of a elementary stream (ES) of the basic contents. The field is the same as fields used in ATSC A/65 PSIP and PSI of the MPEG-2 Systems.

Although FIG. 3 shows that S320 is performed before S330, S330 may be performed before S330 or S320 and S330 may be simultaneously performed.

The terminal receives the basic contents stream and the additional contents stream and plays the broadcasting contents based on the basic contents stream and the additional contents stream (S340).

The terminal receives at least one of the associated playing information on the basic contents and the associated playing information on the additional contents from the transmission system, synchronizes and associates the basic contents and the additional contents with each other based on the received information, and plays the broadcasting contents, in playing the broadcasting contents. For example, in the case in which the basic contents and the additional contents have the same frame ordering or the additional contents are in a file format, only the associated playing information on the basic contents is received through the broadcasting networks, thereby making it possible to synchronize the basic contents and the additional contents with each other. In this case, the basic contents configuring the broadcasting contents are played in real time, and the terminal adjusts the playing position of the additional contents to the playing position of the basic contents, thereby making it possible to allow the basic contents and the additional contents to be synchronized with each other and played.

In this case, the associated playing information on the basic contents and the access information on the additional contents may be received from the transmission system through the broadcasting network. The terminal may access the additional contents using the access information on the additional contents.

In addition, the terminal may request the transmission system to transmit the additional contents from a specific playing position of the additional contents through the communication network, based on the received associated playing information on the basic contents and the received access information on the additional contents.

Further, the terminal may request the transmission system so that the additional contents stream encoded in a specific encoding rate is transmitted according to a communication state of the communication network.

Hereinafter, operations of the transmission system and the terminal will be described in more detail by way of example.

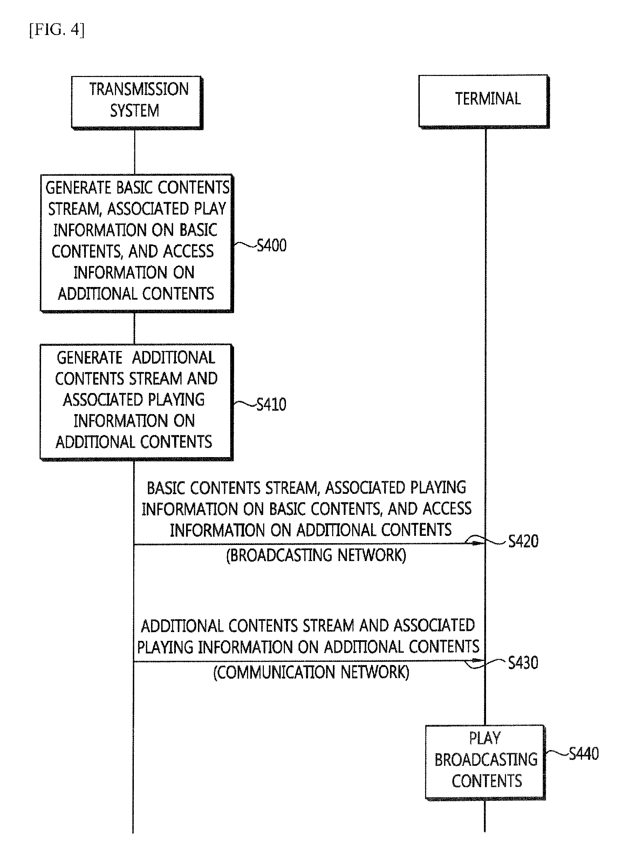

FIG. 4 is a flow chart specifically showing a transmission and reception procedure of associated broadcasting contents based on a heterogeneous network in a push scheme according to the exemplary embodiment of the present invention.

Referring to FIG. 4, the transmission system generates a basic contents stream for basic contents configuring broadcasting contents, associated playing information on the basic contents, and access information on the additional contents (S400).

In addition, the transmission system generates an additional contents stream for additional contents associated with the basic contents and associated playing information on the additional contents (S410).

Although FIG. 4 shows that S400 is performed before S410, S410 may be performed before S400 or S400 and S410 maybe simultaneously performed.

The transmission system transmits the basic contents stream, the associated playing information on the basic contents, and the access information on the additional contents to the terminal through the broadcasting network (S420).

In addition, the transmission system transmits the additional contents stream and the associated playing information on the additional contents to the terminal through the communication network (S430).

Although FIG. 4 shows that S420 is performed before S430, S430 may be performed before S420 or S420 and S430 may be simultaneously performed.

The terminal plays the broadcasting contents based on the basic contents stream, the associated playing information on the basic contents, and the access information on the additional contents received through the broadcasting network and the additional contents stream and the associated playing information on the additional contents received through the communication network (S440).

More specifically, the terminal may first access the additional contents based on the access information on the additional contents received through the broadcasting network. In a push scheme service, the additional contents stream is provided in a multicast form by the transmission system. The terminal may start reception by accessing the additional contents stream based on the access information on the additional contents.

The access information on the additional contents is start information required to receive the additional contents in the terminal. For example, when an IP network is assumed, the access information on the additional contents means a uniform resource location (URL) or a uniform resource identifier (URI). This access information may be direct positional information of and the additional contents and the streaming server configuring the transmission system or positional information of a meta file having information for setting a parameter for streaming the additional contents. In addition, the access information may further include access information (for example, URL or URI information of the associated playing information on the additional contents) on the associated playing information on the additional contents.

The terminal synchronizes playing positions of the basic contents and the additional contents with each other based on the associated playing information on the basic contents received through the broadcasting network and the associated playing information on the additional contents received through the communication network. The terminal associates the synchronized basic contents and additional contents with each other to play the broadcasting contents. For example, the terminal plays the basic contents configuring the broadcasting contents in real time and synchronizes the playing position of the additional contents associated with the basic contents with the playing position of the basic contents to play them, thereby making it possible to play the broadcasting contents.

In this case, as described above, the additional contents stream may be more than one and each additional contents stream may be generated by being encoded in different encoding rates, and the terminal may request the transmission system so that the additional contents stream encoded in a specific encoding rate is transmitted according to the communication state of the communication network. In addition, the basic contents and the additional contents may have the same frame ordering. In this case, one of a part of generating, in the transmission system, the associated playing information on the basic contents to transmit the associated playing information on the basic contents to the terminal through the broadcasting network and a part of generating, in the transmission system, the associated playing information on the additional contents to transmit the associated playing information on the additional contents to the terminal through the communication network may be omitted.

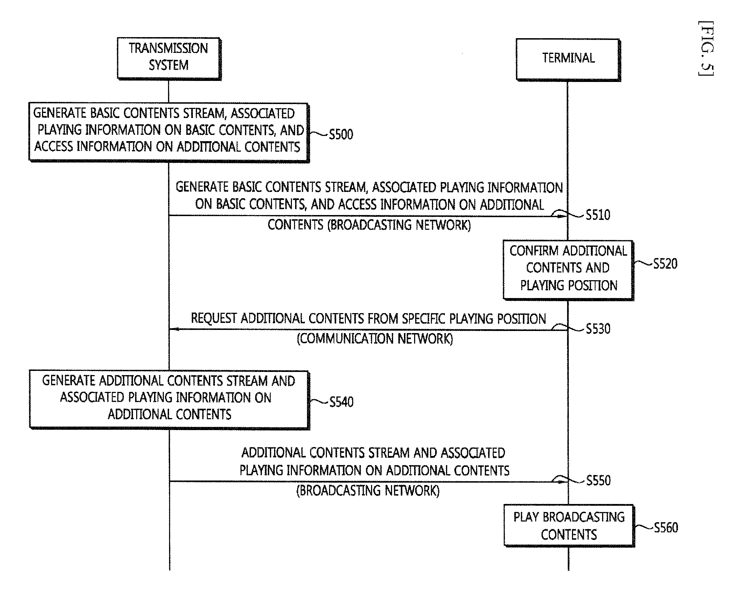

FIG. 5 is a flow chart specifically showing a transmission and reception procedure of associated broadcasting contents based on a heterogeneous network in a pull scheme according to the exemplary embodiment of the present invention.

Referring to FIG. 5, the transmission system generates a basic contents stream for basic contents configuring broadcasting contents, associated playing information on the basic contents, and access information on the additional contents (S500).

The transmission system transmits the basic contents stream, the associated playing information on the basic contents, and the access information on the additional contents to the terminal through the broadcasting network (S510).

The terminal confirms the additional contents associated with the basic contents and a playing position (S520).

In this case, as described above, the terminal may access the additional contents based on the received access information on the additional contents. In addition, the terminal confirms a specific playing position of the additional contents corresponding to a current playing position of the basic contents based on the received associated playing information on the basic contents.

The terminal requests the transmission system for the additional contents from the specific playing position through the communication network (S530).

The transmission system generates an additional contents stream for the additional contents and associated playing information on the additional contents (S540).

The transmission system generates the additional contents stream from the specific playing position based on the additional contents request signal received from the terminal and generates the associated playing information on the additional contents. Alternatively, the associated playing information on the additional contents may be generated in advance. In this case, the transmission system specifies the generated associated playing information on the additional contents.

In addition, the transmission system transmits the generated additional contents stream and the associated playing information on the additional contents to the terminal through the communication network (S550).

The transmission system generates the basic contents stream and the associated playing information on the additional contents according to the request of the terminal and transmits the basic contents stream and the associated playing information on the additional contents to the terminal through the communication network, in the pull scheme. In this case, as described above, the transmission system generates the additional contents stream from the specific playing position of the additional contents and transmits the additional contents stream to the terminal through the communication network. Alternatively, the transmission system may also generate the additional contents stream for the entire additional contents and transmit the additional contents stream from the specific playing position according to a request of the terminal.

The terminal plays the broadcasting contents based on the basic contents stream and the associated playing information on the basic contents received through the broadcasting network in S510 and the additional contents stream and the associated playing information on the additional contents received through the communication network in S550 (S560).

The terminal matches playing positions of the basic contents and the additional contents to each other using the associated playing information on the basic contents and the associated playing information on the additional contents and associates the basic contents and the additional contents of which the playing positions are matched to each other to play the broadcasting contents.

Also, in this case, as described above, the additional contents stream may be more than one and each additional contents stream may be generated by being encoded in different encoding rates, and the terminal may request the transmission system so that the additional contents stream encoded in a specific encoding rate is transmitted according to the communication state of the communication network. In addition, the basic contents and the additional contents may have the same frame ordering. In this case, one of a part of generating, in the transmission system, the associated playing information on the basic contents to transmit the associated playing information on the basic contents to the terminal through the broadcasting network and a part of generating, in the transmission system, the associated playing information on the additional contents to transmit the associated playing information on the additional contents to the terminal through the communication network may be omitted.

As another example, the associated playing information on the basic contents may be transmitted through the communication network rather than the broadcasting network (not shown). In this case, the transmission system may transmit access information on the associated playing information on the basic contents together with the basic contents stream for the basic contents and the access information on the additional contents to the terminal through the broadcasting network. That is, for example, the transmission system may transmit URL or URI of the associated playing information on the basic contents together with the basic contents stream and the access information on the additional contents to the terminal through the broadcasting network. In this case, the terminal may request the transmission system for the associated playing information on the basic contents through the communication network based on the received URL and the URI of the associated playing information on the basic contents. The transmission system may transmit the associated playing information on the basic contents through the communication network according to the request, and the terminal may receive the associated playing information on the basic contents and request the transmission system for the additional contents from the specific playing position through the communication network based on the associated playing information on the basic contents. Next procedures are the same as S540, S550, and S560.

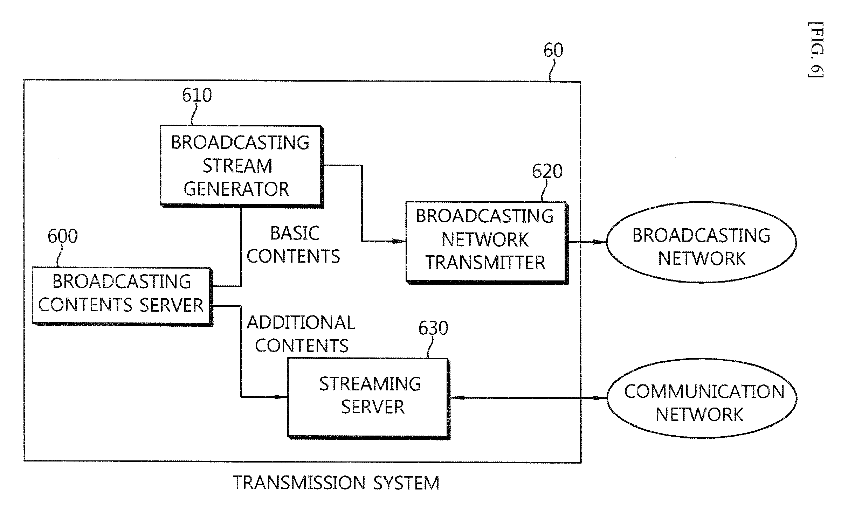

FIG. 6 is a view showing a schematic structure of a transmission system of associated broadcasting contents based on a heterogeneous network according to the exemplary embodiment of the present invention.

Referring to FIG. 6, the transmission system 60 includes a broadcasting contents server 600, a broadcasting stream generator 610, a broadcasting network transmitter 620, and a streaming server 630.

The broadcasting contents server 600 separately outputs basic contents and additional contents configuring broadcasting contents. The additional contents associate with the basic contents.

The broadcasting contents server 600 transfers the basic contents to the broadcasting stream generator 610 and transfers the additional contents to the streaming server 630.

The broadcasting stream generator 610 generates a basic contents stream for the basic contents.

The broadcasting transmitter 620 transmits the generated basic contents stream to the terminal through the broadcasting network.

The streaming server 630 generates an additional contents stream for the additional contents. The streaming server 630 transmits the additional contents stream to the terminal through the communication network.

In this case, the broadcasting network transmitter 620 or the streaming server 630 further transmits at least one of associated playing information on the basic contents and associated playing information on the additional contents to the terminal through the broadcasting network or the communication network. For example, the broadcasting network transmitter 620 may transmit both of the associated playing information on the basic contents and the associated playing information on the additional contents through the broadcasting network. Alternatively, the streaming server 630 may transmit both of the associated playing information on the basic contents and the associated playing information on the additional contents through the communication network. Further, the broadcasting network transmitter 620 may transmit the associated playing information on the basic contents through the broadcasting network, and the streaming server 630 may transmit the associated playing information on the additional contents through the communication network.

The broadcasting network transmitter 620 may allow the associated playing information on the basic contents and access information on the additional contents to be included in the basic contents stream and transmit it through the transmission network. In this case, the access information on the additional contents may include at least one of URL and URI information.

In addition, the streaming server 630 may allow at least one of the associated playing information on the additional contents and access information on the basic contents to be included in the additional contents stream and transmit it through the communication network. In this case, the access information on the basic contents may include a channel ID, a program number, and ES_PID information. In the case in which the terminal first receives the additional contents stream through the communication networks, it may access the basic contents based on the access information on the basic contents.

In addition, the broadcasting network transmitter 620 may transmit at least one of the associated playing information on the basic contents and the associated playing information on the additional contents to the terminal through the broadcasting network in advance. In addition, the streaming server 630 may transmit at least one of the associated playing information on the basic contents and the associated playing information on the additional contents to the terminal through the communication network in advance.

Meanwhile, the basic contents and the additional contents may have the same frame ordering. In this case, the terminal may perform synchronization between the basic contents and the additional contents even in the case in which it recognizes only any one of the associated playing information on the basic contents and the associated playing information on the additional contents. In this case, any one of an operation of transmitting, in the transmission system 60, the associated playing information on the basic contents or an operation of transmitting, in the transmission system 60, the associated playing information on the additional contents may be omitted.

Meanwhile, the streaming server 630 may transmit the additional contents stream to the terminal through the communication network in the push or pull scheme.

In addition, the additional contents stream generated in the streaming server 620 may be more than one and each additional contents stream may be generated by being encoded in different encoding rates. This is to transmit the additional contents stream encoded in an encoding rate appropriate for a communication state of the communication network.

Hereinafter, the transmission system according to the exemplary embodiment of the present invention will be described in more detail by way of example.

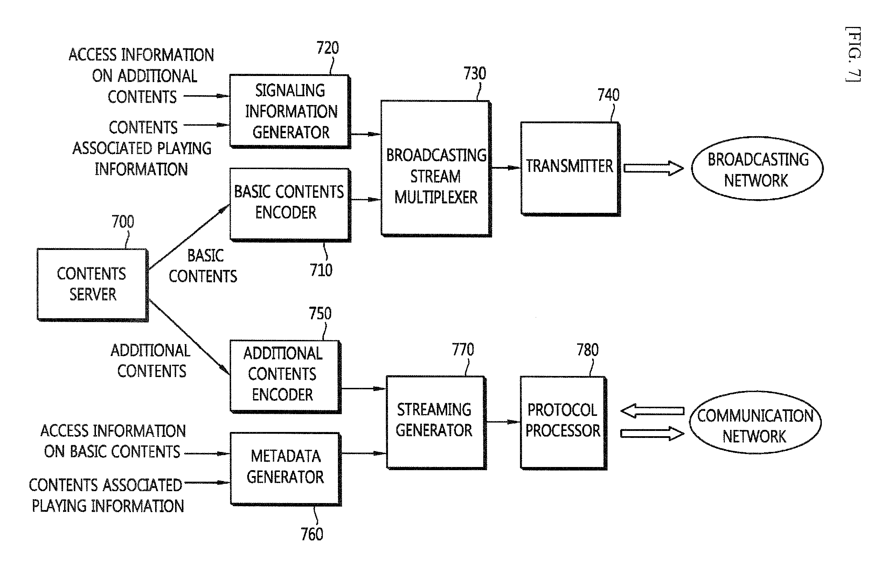

FIG. 7 is a view specifically showing the transmission system of associated broadcasting contents based on a heterogeneous network according to the exemplary embodiment of the present invention.

Referring to FIG. 7, the transmission system may include a contents server 700, a basic contents encoder 710, a signaling information generator 720, a broadcasting stream multiplexer 730, a transmitter 740, an additional contents encoder 750, a metadata generator 760, a streaming generator 770, and a protocol processer 780.

The contents server 700 transfers basic contents to the basic contents encoder 710 and additional contents to the additional contents encoder 750, whereby the basic contents and the additional contents configure broadcasting contents. The additional contents associate with the basic contents.

The basic contents are transferred from the contents server 700 to the basic contents encoder 710 according to a broadcasting schedule.

The basic contents encoder 710 encodes the basic contents in a predetermined scheme and outputs the encoded basic contents in an elementary stream form. The elementary stream forms one broadcasting program. In the case in which the transmission system transmits a plurality of broadcasting programs, a plurality of elementary streams are output as a single transport stream (TS) through the broadcasting stream multiplexer 730.

In order to find an elementary stream associated with a broadcasting program desired by a viewer in the transport stream, information including a kind and configuration information of each broadcasting program provided by each service needs to be transmitted. The information is handled in PSIP/PSI specifications of ATSC and SI specifications of DVB and is provided to the terminal in a table form (hereinafter, referred to as a signaling information table) separately from a data stream. In the present invention, this information is generated in the signaling information generator 620. In this case, meta information including the access information on the additional contents and the associated playing information on the basic contents may be newly defined and included in the signaling information table.

The access information on the additional contents, which is start access information required to receive the additional contents in the reception terminal, means URL or URI when an IP network is assumed. The access information may be positional information of and the additional contents and the streaming server configuring the transmission system or positional information of a meta file having information for setting a parameter for streaming the additional contents.

The associated playing information on the basic contents and the associated playing information on the additional contents generated in a meta data generator 760 to be described below is information informing a playing start time point of the additional contents when two contents associate with each other or synchronous information required to play the two contents in synchronization with each other in a frame unit (in an access unit in an elementary stream).

The information informing the playing start time point of the additional contents may use a triggering mechanism of ATSC A/93 specifications. The triggering mechanism of ATSC A/93 specifications informs a playing or start time point for contents or an application transmitted in advance through a presentation time stamp (PTS) value. However, when the above-mentioned mechanism is used in the associated service according to the exemplary embodiment of the present invention, the following problems occur. In the case in which a receiver of the terminal enters a broadcasting channel before transmission of the basic contents, from which playing position the additional contents starts as well as a playing time point of the associated additional contents needs to be recognized. To this end, the associated playing information according to the exemplary embodiment of the present invention may be defined and inserted as an additional field. The field may be a portion of download of contents for an associated service and triggering signaling for the use of the contents as in the present invention by extending ATSC A/93. An object of the field is to perform signaling for informing from which position the additional contents should be played in order to provide an associated service. In the case of existing specifications, in an application, a start needs to be informed, and contents are always played from the first, such that this information is not required. However, in the case of the present invention, this information is required in order to associate and play the contents in a frame or AU level.

An example of the information is as follows. First, the information is index information for indexing each ordered portion of the additional contents when it is assumed that each portion of the additional contents is ordered. In the case of video contents, the information may be a frame number or a GOP number.

Second, it may be considered that a mark is inserted for informing the basic contents and the additional contents of a paired portion in order to associate and play the basic contents and the additional contents, that is, play them in synchronization with each other. As an example, when stereoscopic video contents are divided into two streams of basic contents and additional contents and then transmitted, the information may be a time code or a time stamp with reference to a specific clock in each frame.

Third, the information, which is information capable of calculating a currently transmitted position of the basic contents, initial PTS information marked when a first frame of the basic contents is transmitted. In addition, the PTS informing a playing time point of contents inserted into an original trigger signal informs a current PTS of a currently transmitted frame. When the PTS value is linearly changed as a frame progresses, the receiver may calculate whether a frame of the basic contents having the current PTS is the n-th frame from these two PTSs. If the additional contents have the same frame ordering as that of the basic contents, this indicates a frame of the additional contents corresponding to the current frame of the basic contents. Therefore, when playing is made from this position, two contents may be played in synchronization with each other. As another example, considers a case of scalable-coding and transmitting a source of a UHD image having a resolution larger than that of an HD image. The HD image obtained by downsampling an original image may be considered as the basic contents encoded as a base layer and transmitted through a broadcasting network, and the UHD image encoded using a scalable codec as an enhancement layer for a terminal supporting the UHD image may be considered as the additional contents transmitted through the communication network. Since the two streams have the same frame ordering, when a current frame position of the basic contents is recognized, a corresponding frame position of the additional contents may be recognized, and decoding is performed from this frame, thereby making it possible to obtain a reconstructed UHD image from the two streams. Further, this third information may not be utilized in the case in which clock discontinuity between the initial PTS and the current PTS in the transmit end occurs. To avoid this problem, the multiplexed TS is not directly transmitted, but a re-multiplexer is provided to detect the clock discontinuity and a discontinued offset and add a value corresponding to the offset to the initial PTS value, thereby allowing the clock to be linearly changed in the receive end.

The synchronous information required for playing the two contents in synchronization with each other in the frame unit (the access unit in the elementary stream) may be configured in a scheme of specifying a position (AU) of a corresponding additional contents stream based on a specific position (AU) of the basic contents stream configuring the broadcasting contents and be realized using a frame number or a time stamp capable of calculating the frame number. In addition, the synchronous information may also be inserted into a header of the basic contents stream packetized when the basic contents stream is multiplexed.

The broadcasting stream multiplexer 730 transmits a transport stream generated by multiplexing the signaling information table generated in the signaling information generator 720 and the basic contents stream generated in the basic contents encoder 710 to the transmitter 740.

The transmitter 740 transmits the multiplexed transport stream including the signaling information table and the basic contents stream to the terminal through the broadcasting network after the multiplexed transport stream is subjected to processes such as a channel encoding process, modulation process, and the like.

Unlike the basic contents transmitted to the terminal through the broadcasting network, the additional contents are transmitted to the terminal through the communication network in a streaming form according to a broadcasting schedule. Alternatively, the additional contents may also be transmitted to the terminal to the communication network in the streaming form when a request is made from the terminal.

The additional contents encoder 750 receives the additional contents from the contents server 700. The additional contents encoder 750 encodes the additional contents. The encoded additional contents have a stream form such as TS or a form in which they are wrapped in a specific file format. In this case, the additional contents encoder 750 may output the additional contents as a plurality of additional contents streams having different encoding rates. This is to allow playing of the additional contents not to be discontinued in the terminal even in the case in which a communication environment of the communication network is not smooth.

Meanwhile, the basic contents and the additional contents may have the same frame ordering. In this case, as described above, when the current frame of the basic contents is recognized, the playing position of the additional contents having the same frame ordering may be directly found, the additional contents are played from this position, thereby making it possible to play the two contents in synchronization with each other.

The metadata generator 760 defines associated playing information on the additional contents as new metadata to generate the new metadata. In this case, the metadata generator 760 may further generate access information on the basic contents.

The streaming generator 770 receives the additional contents stream and the associated playing information on the additional contents to convert them into information for streaming and generates a payload of a streaming packet.

The protocol processor 780 serves to process a protocol for the streaming. That is, the protocol processor generates and transmits or receives and analyzes the packet according to a protocol stack. In this case, when a request for transmission of the additional contents is received from the terminal, the streaming generator 770 receives the additional contents stream to generate and transmit the packet. In the case in which a control signal packet informing that an error is present in the transmitted packet is received or it is recognized that an error is present in the transmitted packet, the protocol processor 780 retransmits the corresponding packet.

The protocol used for the streaming includes all protocols supporting real time relay, for example, a hyper text transport protocol (HTTP) supporting adaptive streaming as well as a real time transport protocol (RTP), a real time messaging protocol (RTMP), a real time streaming protocol (RTSP), and the like.

Hereinafter, a main transmission operation by the protocol processor 780 will be described. In the case in which a request for the additional contents is made from the terminal, data generated in the streaming generator 770 are transmitted in order to set a streaming environment. In the case in which logical channels for data and control are separately provided according to the protocol, the above-mentioned operation is performed in the control channel. When an environmental parameter and an encoding rate are set, the streaming packet is transmitted. At this time, after the associated playing information on the additional contents is transmitted, the additional contents stream may be transmitted. In addition, the additional contents stream may be transmitted from the playing position of the additional contents requested by the terminal. Further, when the terminal requests the additional contents stream having a specific encoding rate according to the communication state of the communication network, the additional contents stream may be switched into the additional contents stream having the specific encoding rate and then transmitted. For example, the additional contents streams having different encoding rates may be transmitted to different channels (or ports) in order to support various communication bandwidths of the terminals in a push scheme server.

Hereinafter, a structure of the terminal receiving the basic contents and the additional contents from the transmission system through a heterogeneous network in the stream form will be described.

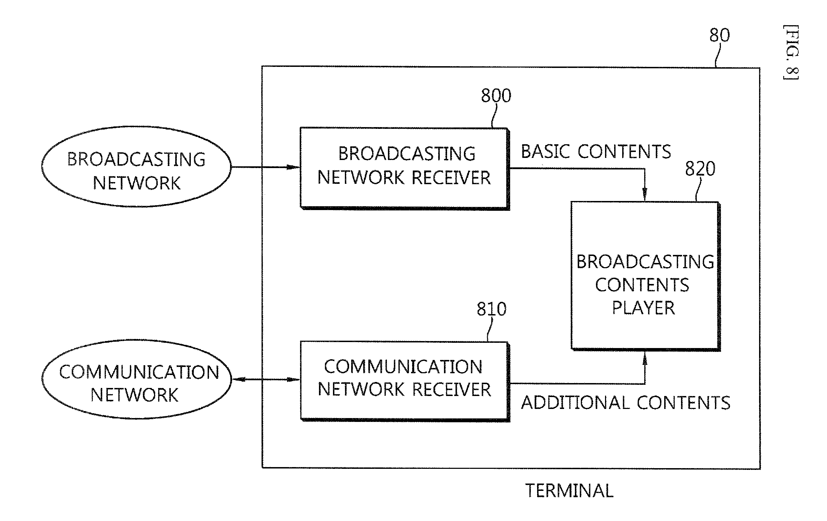

FIG. 8 is a view showing a schematic structure of a reception terminal of associated broadcasting contents based on a heterogeneous network according to the exemplary embodiment of the present invention.

Referring to FIG. 8, the terminal 80 includes a broadcasting network receiver 800, a communication network receiver 810, and a broadcasting contents player 820.

The broadcasting network receiver 800 receives a basic contents stream for basic contents from the transmission system through the broadcasting network. In addition, the communication network receiver 810 receives an additional contents stream for additional contents associated with the basic contents from the transmission system through the communication network.

The broadcasting network receiver 800 or the communication network receiver 810 receives at least one of associated playing information on the basic contents and associated playing information on the additional contents from the transmission system. In this case, the broadcasting network receiver 800 may receive the associated playing information on the basic contents together with access information on the additional contents from the transmission system through the broadcasting network. The communication network receiver 810 may access the additional contents based on the access information on the additional contents. In addition, the broadcasting network receiver 800 may receive the associated playing information on the basic contents from the transmission system, and the communication network receiver 810 may receive the associated playing information on the additional contents from the transmission system.

The broadcasting contents player 820 plays broadcasting contents based on the received basic contents stream and additional contents stream. In this case, the broadcasting contents player 820 synchronizes playing positions of the basic contents and the additional contents using the received associated playing information and associates the basic contents and the additional contents with each other based on the synchronized playing position to play the broadcasting contents. The broadcasting contents, which are contents to be finally viewed to a viewer by the terminal, are configured of the basic contents and the additional contents.

In addition, the communication network receiver 810 may request the terminal may request the transmission system to transmit the additional contents from a specific playing position of the additional contents through the communication network based on the associated playing information on the basic contents and the access information on the additional contents.

Further, the communication network receiver 810 may request the streaming server configuring the transmission system so that the additional contents stream encoded in a specific encoding rate is transmitted according to the communication state of the communication network.

Hereinafter, the reception terminal according to the exemplary embodiment of the present invention will be described in more detail by way of example.

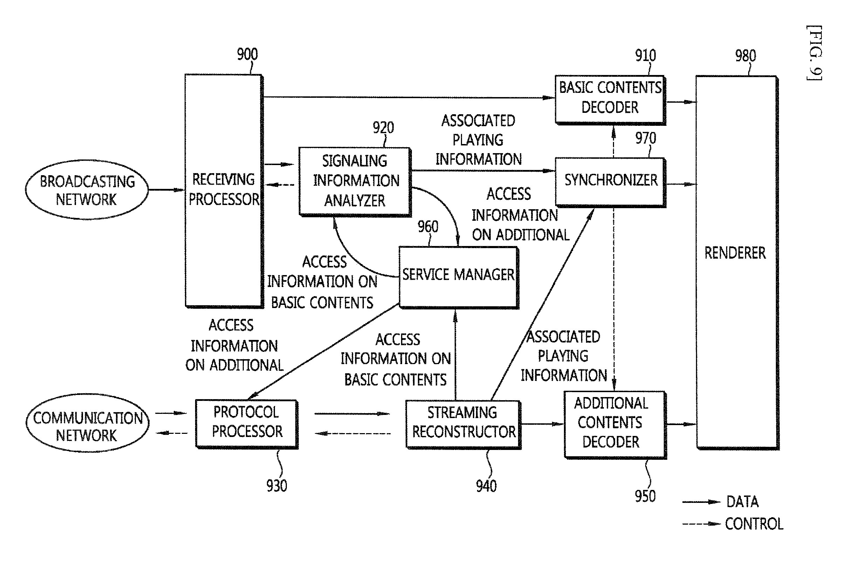

FIG. 9 is a view showing the reception terminal of associated broadcasting contents based on a heterogeneous network according to the exemplary embodiment of the present invention.

Referring to FIG. 9, the reception terminal according to the exemplary embodiment of the present invention include a receiving processor 900, a basic contents decoder 910, a signaling information analyzer 920, a protocol processor 930, a streaming reconstructor 940, an additional contents decoder 950, a service manager 960, a synchronizer 970, and a renderer 980.

The receiving processor 900 performs a RF signal receiving function, a demodulating function, a channel decoding function, or the like, and at the same time, performs a function of extracting basic contents selected from the multiplexed stream by the terminal. In this case, the receiving processor 900 may transfer a kind and configuration information of the broadcasting contents, the access information on the additional contents associated with the basic contents, the associated playing information on the basic contents, and the like, that are included in the multiplexed stream received through the broadcasting network to the signaling information analyzer 920.

The signaling information analyzer 920 determines whether or not the additional contents associated with the basic contents are present and transfers the access information on the additional contents to the service manager 960. In this case, the signaling information analyzer 920 may further transfer the associated playing information on the basic contents and the current playing position information of the basic contents to the service manager 960.

The signaling information analyzer 920 transfers the associated playing information on the basic contents to the synchronizer 970. Alternatively, the receiving processor 900 may also directly transfer the associated playing information on the basic contents to the synchronizer 970.

The protocol manager 960 transmits the access information on the additional contents and a reception signal so that the protocol processor 960 receives the additional contents from the transmission system in order to obtain the additional contents associated with the basic contents. In this case, the service manager 960 may specify a specific playing position of the additional contents based on the playing position of the basic contents to transmit a signal to the protocol processor 960.

The protocol processor 930 generates the additional contents request signal in a packet form based on the access information on the additional contents received from the service manager 960 to transmit the additional contents request signal to the streaming server configuring the transmission system through communication network. In this case, the protocol processor 930 may request the streaming server for the additional contents from a specific playing position.

Although the present specification has described that the access information on the additional contents is obtained from the multiplexed stream (including the basic contents stream) received through the broadcasting network, the access information on the additional contents may be obtained from information such as a streaming URL encoding type, or the like, of the additional contents through a metafile (for example, including a web page file including a plurality of connections) received from the streaming server by accessing the streaming server from independently different applications or previously known IP addresses/ports.

The protocol processor 930 receives the additional contents stream and the meta information as a packet from the streaming server. In the case in which an error is present in the received packet, control information requesting the streaming server for retransmission may be transmitted. A payload of the packet that does not have an error is transferred to the streaming reconstructor 940.

The streaming reconstructor 940 transfers the received meta information and the associated playing information on the additional contents to the synchronizer 970. The streaming reconstructor 940 transfers to the additional contents stream to the additional contents decoder 950. Meanwhile, in the case in which the terminal receives the meta information including the access information on the basic contents and the additional contents stream before the basic contents stream, the streaming reconstructor 940 may transfer the access information on the basic contents to the service managing unit 960. In this case, the terminal may access the basic contents based on the access information on the basic contents.

In addition, in the case in which it is determined that reception of the additional contents stream is delayed and the additional contents stream is received in a significantly low rate due to a change in traffic of the communication network, the streaming reconstructor 940 requests the streaming server for the additional contents stream encoded in a specific encoding rate according to the traffic of the communication network. This may be determined through an input rate and a playback rate of a buffer.

The additional contents decoder 950 decodes the additional contents stream to obtain the additional contents.

The synchronizer 970 triggers the additional contents to be played by finding the playing time point of the additional contents associated with the basic contents based on the associated playing information on the basic contents and the associated playing information on the additional contents. In this case, when the associated information is transferred according to ATSC A/93, the synchronizer 970 may trigger the additional contents by analyzing the associated information. Alternatively, the synchronizer 970 may synchronize the additional contents and the basic contents with each other in a frame unit. In this case, a corresponding frame number needs to be calculated. In the case in which time stamp information of the basic contents is received as the associated playing information, it is possible to recognize whether the basic contents is currently the n-th frame from the time stamp information and frame per second (FPS) information of the basic contents. Based on this, the frame of the additional contents corresponding to the basic contents may be synchronized with a playing frame of the basic frame. In the case in which the playing positions of the two contents are different, a priority is allocated to the playing position of the basic contents to adjust the playing position of the additional contents.

The renderer 980 associates the synchronized basic contents and additional contents with each other to play the broadcasting contents.

The present invention may avoid a delay due to a download time as compared to a download scheme by transmitting the additional contents in the streaming form as described above, such that it is advantageous to a service sensitive to a delay, such as an AV service. In addition, since the terminal does not download the additional contents, a large capacity storage device is not required, and leakage of the additional contents before the broadcasting is prevented.

Further, since the present invention uses an advantage of a bi-directional communication network as compared to a uni-direction broadcasting network, even in the case in which a user does not make a reservation in advance, only portions of the additional contents after a time in which the user accesses the service are streamed and played, such that the entire additional contents need not to be downloaded.

The spirit of the present invention has been just exemplified. It will be appreciated by those skilled in the art that various modifications and alterations can be made without departing from the essential characteristics of the present invention. Accordingly, the embodiments disclosed in the present invention and the accompanying drawings are used not to limit but to describe the spirit of the present invention. The scope of the present invention is not limited only to the embodiments and the accompanying drawings. The protection scope of the present invention must be analyzed by the appended claims and it should be analyzed that all spirits within a scope equivalent thereto are included in the appended claims of the present invention.

## Claims

1. A method of transmitting broadcasting contents in a transmission system of associated broadcasting contents based on a heterogeneous network, the transmission method comprising:
generating a basic contents stream for basic contents;
transmitting the generated basic contents stream to a terminal through a broadcasting network;
generating an additional contents stream for additional contents associated with the basic contents; and
transmitting the generated additional contents stream to the terminal through a communication network,
wherein at least one of associated playing information on the basic contents and associated playing information on the additional contents is transmitted to the terminal.

2. The method of claim 1, wherein the associated playing information on the basic contents and access information on the additional contents are included in the basic contents stream and transmitted to the terminal through the broadcasting network.

3. The method of claim 2, wherein the associated playing information on the basic contents includes at least one of a frame index, a time stamp, and PTS information, and
the access information on the additional contents includes at least one of URL and URI information.

4. The method of claim 1, wherein at least one of the associated playing information on the additional contents and access information on the basic contents is included in the additional contents stream and transmitted to the terminal through the communication network.

5. The method of claim 4, wherein the associated playing information on the additional contents includes at least one of a frame index, a time stamp, and PTS information, and
the access information on the basic contents includes a channel ID, a program number, and ES_PID information.

6. The method of claim 1, wherein the additional contents stream is more than one and each additional contents stream is generated by being encoded in different encoding rates.

7. A method of receiving broadcasting contents in a reception terminal of associated broadcasting contents based on a heterogeneous network, the reception method comprising:
receiving a basic contents stream for basic contents from a transmission system through a broadcasting network;
receiving an additional contents stream for additional contents associated with the basic contents from the transmission system through a communication network; and
playing the broadcasting contents based on the received basic contents stream and additional contents stream,
wherein at least one of associated playing information on the basic contents and associated playing information on the additional contents is received from the transmission system, and the basic contents and the additional contents are synchronized with each other based on the received associated playing information

8. The method of claim 7, wherein the associated playing information on the basic contents and access information on the additional contents are received from the transmission system through the broadcasting network.

9. The method of claim 8, further comprising requesting the transmission system to transmit the additional contents from a specific playing position thereof through the communication network.

10. The method of claim 7, further comprising:
requesting the transmission system through the communication network so that the additional contents stream encoded in a specific encoding rate is transmitted according to a communication state of the communication network.

11. A system of transmitting associated broadcasting contents based on a heterogeneous network, the transmission system comprising:
a broadcasting stream generator generating a basic contents stream for basic contents;
a broadcasting network transmitter transmitting the generated basic contents stream to a terminal through a broadcasting network; and
a streaming server generating an additional contents stream for additional contents associated with the basic contents and transmitting the generated additional contents stream to the terminal through a communication network,
wherein the broadcasting network transmitter or the streaming server transmits at least one of associated playing information on the basic contents and associated playing information on the additional contents to the terminal.

12. The system of claim 11, wherein the broadcasting network transmitter allows the associated playing information on the basic contents and access information on the additional contents to be included in the basic contents stream and transmits it to the terminal through the broadcasting network.

13. The system of claim 12, wherein the associated playing information on the basic contents includes at least one of a frame index, a time stamp, and PTS information, and
the access information on the additional contents includes at least one of URL and URI information.

14. The system of claim 11, wherein the streaming server allows at least one of the associated playing information on the additional contents and access information on the basic contents to be included in the additional contents stream and transmits it to the terminal through the communication network.

15. The system of claim 14, wherein the associated playing information on the additional contents includes at least one of a frame index, a time stamp, and PTS information, and
the access information on the basic contents includes a channel ID, a program number, and ES_PID information.

16. The system of claim 11, wherein the additional contents stream generated in the streaming server is more than one and each additional contents stream is generated by being encoded in different encoding rates.

17. A reception terminal of associated broadcasting contents based on a heterogeneous network, the reception terminal comprising:
a broadcasting network receiver receiving a basic contents stream for basic contents from a transmission system through a broadcasting network;
a communication network receiver receiving an additional contents stream for additional contents associated with the basic contents from the transmission system through a communication network; and
a broadcasting contents player playing the broadcasting contents based on the received basic contents stream and additional contents stream,
wherein the broadcasting network receiver or the communication network receiver receives at least one of associated playing information on the basic contents and associated playing information on the additional contents from the transmission system, and the broadcasting contents player synchronizes the basic contents and the additional contents with each other based on the received associated playing information.

18. The reception terminal of claim 17, wherein the broadcasting network receiver receives the associated playing information on the basic contents and access information on the additional contents from the transmission system through the broadcasting network.

19. The reception terminal of claim 18, wherein the communication network receiver requests the transmission system to transmit the additional contents from a specific playing position thereof through the communication network.

20. The reception terminal of claim 17, wherein the communication network receiver requests the transmission system through the communication network so that the additional contents stream encoded in a specific encoding rate is transmitted according to a communication state of the communication network.
